# EUROPÄISCHE PATENTSCHRIFT

(11) **EP 2 793 361 B1**
(45) Veröffentlichungstag und Bekanntmachung des Hinweises auf die Patenterteilung: **30.08.2017**
(21) Anmeldenummer: 13164083.1
(22) Anmeldetag: 17.04.2013
(51) Int. Cl.: H02K 1/18, H02K 5/24

(54) **Rotierende elektrische Maschine**
Rotating electric machine
Machine électrique rotative

(43) Veröffentlichungstag der Anmeldung: 22.10.2014
(73) Patentinhaber: Siemens Aktiengesellschaft, 80333 München (DE)
(72) Erfinder: Dorr, Gerhard, 90584 Allersberg (DE)

(56) Entgegenhaltungen:
- EP-A1- 2 045 896
- GB-A- 669 078
- US-A- 3 988 622

## Beschreibung

Die vorliegende Erfindung betrifft eine rotierende elektrische Maschine mit einem Ständer und einem in einer Öffnung des Ständers drehbar gelagert angeordneten Läufer.

Gattungsgemäße elektrische Maschinen sowie Ständer hierfür sind dem Grunde nach im Stand der Technik bekannt, also dass es eines gesonderten druckschriftlichen Nachweises nicht bedarf. Bei einer rotierenden elektrischen Maschine ist dem Grunde nach ein Ständer als Stator vorgesehen, der in der Regel eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Eine rotierende elektrische Maschine ist eine Vorrichtung, die elektrische Energie in mechanische Energie, insbesondere Bewegungsenergie (Motorbetrieb) und/oder mechanische Energie in eine elektrische Energie (Generatorbetrieb) umformt. Bei der Bewegung handelt es sich in der Regel um eine Drehbewegung, die vom Läufer ausgeführt wird. Der Ständer ist im Unterschied zum Läufer drehfest angeordnet, das heißt, bei der Drehbewegung handelt es sich um eine Drehbewegung des Läufers gegenüber dem Ständer. Der Ständer und der Läufer sind mittels eines magnetischen Flusses verkettet, wodurch im Motorbetrieb die Kraftwirkung, nämlich das Drehmoment erzeugt wird, die den Läufer gegenüber dem Ständer drehend antreibt, und im Generatorbetrieb dem Läufer zugeführte mechanische Energie in Form einer Rotation in elektrische Energie umwandelt. Zu diesem Zweck weisen der Ständer und der Läufer jeweils eine von einem Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die an ein mehrphasiges, insbesondere dreiphasiges elektrisches Netz angeschlossen sind, wie beispielsweise Asynchronmaschinen, Synchronmaschinen, Synchronmaschinen mit Dämpferkäfig, oder dergleichen.

Rotierende elektrische Maschinen weisen in der Regel ein Gehäuse auf. Bei großen rotierenden elektrischen Maschinen wird häufig ein Blechpaket des Ständers in das Gehäuse geschrumpft. Über den Schrumpfsitz kann das erzeugte Drehmoment in eine Tragstruktur, ein Fundament oder dergleichen eingeleitet werden, und die Maschine abgestützt werden. Häufig sind die Gehäuse der rotierenden elektrischen Maschinen durch Stahlkonstruktionen gebildet, die aus einzelnen Teilen zusammengeschweißt sind. Aufgrund des Dehnungsverhaltens von Stahl ist der Schrumpfsitz vergleichsweise unproblematisch, weshalb sich diese Art von Gehäuse im praktischen Gebrauch bewährt hat.

Es hat sich jedoch gezeigt, dass der Aufwand für solche Gehäuse recht hoch ist. Um diesen Aufwand, insbesondere Kosten, reduzieren zu können, gibt es Bestrebungen, die aufwändigen Gehäusekonstruktionen durch Gusskonstruktionen zu ersetzen. Aus Kostengründen wird dabei Grauguss bevorzugt.

In Bezug auf die rotierende elektrische Maschine erweist sich aber das Dehnungsverhalten aufgrund von Temperatureinwirkung von Grauguss als ungünstig. Grundsätzlich ist Grauguss nur bedingt geeignet, Zugspannungen, die infolge von Schrumpfsitzen in der Struktur entstehen, zu übertragen. Deshalb ist es bei Anwendung von Grauguss erforderlich, die Gehäusekonstruktionen aufwändig zu versteifen, wodurch ein großer Teil einer möglichen Einsparung verloren geht. Weitere Hindernisse entstehen bei der Verwendung von Grauguss durch Einschränkungen bezüglich der Kühlung der rotierenden elektrischen Maschine, insbesondere hinsichtlich der Belüftungsquerschnitte.

Die EP 2 045 896 A1 offenbart eine dynamoelektrische Maschine.

Die GB 669,078 offenbart einen Stator für eine dynamoelektrische Maschine sowie ein Verfahren zu dessen Herstellung.

Die Erfindung hat es sich zur Aufgabe gemacht, den Aufwand für Gehäuse zu reduzieren und zugleich die aus der Verwendung von Grauguss bekannten Nachteile weitgehend zu vermeiden.

Als Lösung wird mit der Erfindung eine rotierende elektrische Maschine nach Anspruch 1 vorgeschlagen. Ein Ständer dieser rotierenden elektrischen Maschine weist ein Blechpaket in Form eines aus einem ferromagnetischen Werkstoff hergestellten und damit magnetisierbaren, schichtweise aufgebauten Körpers, zwei Druckringe und zwei Drehmomentstützen auf, wobei jeweils ein Druckring mit jeweils einem der gegenüberliegenden stirnseitigen Enden des Blechpakets stoffschlüssig verbunden ist, wobei an jedem der Druckringe jeweils eine der Drehmomentstützen befestigt ist, sodass das Blechpaket mit den Druckringen mittels der Drehmomentstützen direkt gestützt ist und auf den Ständer einwirkende Kräfte und Momente über die Drehmomentstützen vollständig ableitbar sind, so daß mittels der Drehmomentstützen das Blechpaket festlegbar ist.

Gegenüber den bekannten Gehäusekonstruktionen des Stands der Technik kommt die erfindungsgemäße Ausgestaltung mit wesentlich weniger, insbesondere weniger komplexen Bauteilen aus. Die Drehmomentstütze ist an beiden Stirnseiten des Blechpakets angeordnet und kann gleich ausgeführt sein. Die Stirnseiten des Blechpakets beziehungsweise dessen stirnseitigen Enden sind insbesondere Begrenzungen in axialer Erstreckung des Blechpakets. Axial ist die Richtung einer Drehachse des im Ständer drehbar angeordneten Läufers. Darüber hinaus kann die Drehmomentstütze kostengünstig aus Grauguss gebildet sein, weil Grauguss im Unterschied zu Zugspannungen Druckspannungen gut übertragen kann.

Die Erfindung nutzt somit die Eigensteifigkeit des Blechpaketes aus und kann deshalb auf ein geschlossenes Gehäuse komplett verzichten. Bedarfsweise kann ergänzend eine dünnwandige Schutzabdeckung vorgesehen sein, die als einfache Blechkonstruktion kostengünstig herstellbar ist. Dadurch ergibt sich zudem eine Gewichtseinsparung, weil ein Gehäuse, beispielsweise in Form einer kostengünstigen Blechkonstruktion, keine großen Kräfte mehr übertragen muss.

Vollständig ableitbar bedeutet, dass sowohl das Gewicht des Ständers als auch im bestimmungsgemäßen Betrieb einwirkende Momente, insbesondere Drehmomente im Wesentlichen ausschließlich über die Drehmomentstützen abgeleitet werden. Weitere separate Einrichtungen zur Kraft- und/oder Drehmomentübertragung, wie zum Beispiel kraftübertragende Gehäuse, Halterungen und/oder dergleichen, können eingespart werden. Insbesondere erlaubt es die Erfindung, tragende Gehäusevorrichtungen sowie hiermit verbundene aufwändige Verbindungsverfahren wie Schrumpfpressen oder dergleichen zu vermeiden. Das Gewicht des Ständers sowie einwirkende Momente werden vorzugsweise ausschließlich mittels der Drehmomentstütze abgeleitet. Die Drehmomentstützen stützen das Blechpaket mit den Druckringen somit direkt.

Im Unterschied zum Stand der Technik ist bei der Erfindung der Ständer über das Blechpaket lediglich an seinen stirnseitigen Enden abgestützt. Dazwischen ist keine weitere Abstützung mehr erforderlich, wodurch insbesondere Kontakt mit weiteren Außenteilen weitgehend vermieden werden kann. Dies führt zu einem weiteren Vorteil in Bezug auf Schallemission, weil der Ständer in dem Bereich zwischen den Stirnseiten in der Regel stark schwingt und diese Schwingungen bei Kontakt mit Außenteilen Schall erzeugen können. Die Erfindung erlaubt es also zugleich, eine Reduktion der Schallimmission zu erreichen.

Der Ständer weist ein Blechpaket auf, das seinerseits aus einzelnen, untereinander elektrisch isolierten ferromagnetischen Blechen besteht. Die Bleche können je nach Verwendungszweck auch als Dynamoblech, Motorenblech, Transformatorenblech oder dergleichen bezeichnet sein. Derartige Bleche unterliegen der Normung, beispielsweise EN10106, EN10107 oder dergleichen. In das Blechpaket eingelassen sind stromführende Wicklungen, die einen magnetischen Fluss bereitstellen. Die Wicklung des Ständers ist somit häufig in das Blechpaket integriert ausgeführt. Der Ständer nimmt die Reaktio in Bezug auf ein Läuferdrehmoment auf und stützt sich gegen eine Auflage ab, um drehfest angeordnet zu sein. Die Abstützung kann durch ein Fundament oder dergleichen Auflage gebildet sein. Das Blechpaket bezeichnet also einen aus ferromagnetischen Werkstoffen hergestellten und damit magnetisierbaren, schichtweise aufgebauten Körper. Die Aufgabe des Blechpakets besteht darin, in Verbindung mit den stromdurchflossenen Wicklungen den magnetischen Fluss zu bündeln.

An den stirnseitigen Enden des Blechpakets sind jeweils die beiden Drehmomentstützen befestigt. Mittels der Drehmomentstützen ist das Blechpaket festlegbar, das heißt, das Drehmoment in Form der Reaktio kann über die Drehmomentstütze abgeleitet werden. Dadurch ist das Blechpaket und infolgedessen der Ständer drehfest angeordnet im Unterschied zum Läufer.

Die Befestigung der Drehmomentstützen stirnseitig an den Enden des Blechpakets erfolgt über Druckringe, wobei jeweils einer an einer der stirnseitigen Enden des Blechpakets angeordnet ist. Über die Druckringe wird eine zuverlässige, vorzugsweise lösbare, Ankopplung der Drehmomentstützen an das Blechpaket erreicht. Dies ist vorteilhaft, wenn die rotierende elektrische Maschine, insbesondere der Ständer, zu Wartungszwecken, Reparatur oder dergleichen demontiert werden muss.

Die Druckringe selbst sind mit dem Blechpaket stoffschlüssig verbunden, das heißt, zwischen dem Druckring und dem Blechpaket besteht eine im Wesentlichen nicht lösbare Verbindung. Diese kann zum Beispiel Löten, Verkleben und/oder dergleichen vorgesehen sein. Der Druckring erlaubt es, eine zuverlässige mechanische Ankopplung des Blechpakets an die Drehmomentstütze während des bestimmungsgemäßen Betriebs des Ständers in der rotierenden elektrischen Maschine zu gewährleisten. Beispielsweise kann Einsatz des Druckrings unterschiedliches Ausdehnungsverhalten, Korrosion auslösende elektrochemische Vorgänge und/oder dergleichen anpassen beziehungsweise vermeiden helfen.

Besonders vorteilhaft ist die stoffschlüssige Verbindung mittels Schweißen gebildet. Dadurch kann eine besonders zuverlässige und hoch belastbare Verbindung erreicht werden.

Die Drehmomentstütze selbst kann aus Metall, insbesondere kostengünstig aus Grauguss hergestellt sein. Zwischen den Drehmomentstützen ist das Blechpaket von außen frei zugänglich, sofern nicht weitere Einrichtungen in diesem Bereich für den vorgesehenen bestimmungsgemäßen Betrieb der rotierenden elektrischen Maschine, wie beispielsweise Kühlkanäle oder dergleichen, dort angeordnet sind. Die weitgehend freie Zugänglichkeit des Blechpakets von außen erlaubt es, eine kostengünstige effiziente Kühlung vorzusehen. Dadurch kann die Leistungsfähigkeit der rotierenden elektrischen Maschine erhöht werden. Vorteilhaft ist diese Anordnung an beiden stirnseitigen Enden des Ständerblechpakets identisch ausgeführt.

Vorteilhaft kann mittels des Druckrings erreicht werden, dass ein Drehmoment vom Ständer mittels Flächenpressung zwischen dem Druckring und der Drehmomentstütze auf diese übertragen werden kann. Die Flächenpressung kann beispielsweise dadurch erzeugt werden, dass der Druckring mit der Drehmomentstütze axial verschraubt ist. Dabei ist die Anzahl der Schrauben vorzugsweise derart gewählt, dass die Flächenpressung ausreicht, um im ungünstigsten Lastfall zum Beispiel das Kurzschlussmoment des Motors zu übertragen. Vorteilhaft ist diese Anordnung an beiden stirnseitigen Enden des Blechpakets des Ständers identisch ausgeführt.

Eine weitere Ausgestaltung sieht vor, dass die Drehmomentstütze eine Stütztraverse aufweist. Die Stütztraverse ist vorzugsweise einstückig mit der Drehmomentstütze verbunden und kann beispielsweise durch einen radial nach außen ragenden Vorsprung gebildet sein. Die Stütztraverse kann aber auch als separates Bauteil ausgebildet sein, das mit der Drehmomentstütze verbunden ist, beispielsweise mittels Verschraubung, Vernietung, Verschweißung, Verklebung und/oder dergleichen. Über die Stütztraverse kann die Drehmomentstütze zum Beispiel an einem Rahmen befestigt sein, der vorzugsweise mit einem Fundament oder einer vergleichbare Auflage verbunden ist. Vorteilhaft sind wenigstens drei vorzugsweise jedoch vier Stütztraversen vorgesehen, wobei die Stütztraversen einen gegenüberliegenden Umfangspositionen der Drehmomentstützen angeordnet sind. Dadurch lässt sich eine zuverlässige, stabile Fixierung des Ständers, insbesondere des Blechpakets erreichen.

Gemäß einer weiteren Ausgestaltung der Erfindung ist vorgesehen, dass die Drehmomentstütze eine Lagervorrichtung für einen Läufer der rotierenden elektrischen Maschine aufweist. Die Lagervorrichtung kann zum Beispiel durch einen Lagerschild gebildet sein, der mit der Drehmomentstütze verbunden ist, insbesondere einstückig mit ihr ausgebildet ist. Der Lagerschild kann eine Lagereinheit aufweisen, die eine Welle des in der Öffnung des Ständers angeordneten Läufers drehbar lagert.

Gemäß einer weiteren Ausgestaltung wird vorgeschlagen, dass die Stütztraverse eine Dämpfungseinheit aufweist. Mittels der Dämpfungseinheit kann erreicht werden, dass rotierende elektrische Maschinen, die bislang nicht für einen Betrieb im überkritischen Bereich geeignet sind, überkritisch betrieben werden können. Daneben können aufbau- und/oder maschinenbedingte Resonanzen eingestellt und/oder gedämpft werden sowie eine Schallerzeugung reduziert werden. So können beispielsweise Kosten eingespart werden, indem teure Gleitlager durch kostengünstige Wälzlager bei der Lagerung des Läufers vorgesehen sein können. Weitere Vorteile ergeben sich dadurch, dass Kosten durch reduzierte Anforderungen an die Genauigkeit bei Fertigungsprozessen eingespart werden können, eine höhere Sicherheit erreicht werden kann und Sperrbereiche hinsichtlich Drehzahlen im bestimmungsgemäßen Betrieb, insbesondere bei Drehzahlregelungen, reduziert werden oder entfallen können.

Die Dämpfungseinheit kann als passives Dämpfungssystem oder auch als aktives Dämpfungssystem ausgestaltet sein. Ein passives Dämpfungssystem kann zu diesem Zweck elastisch und/oder plastisch verformbare Elemente aufweisen, beispielsweise Gummidämpfer, Federelemente und/oder dergleichen. Darüber hinaus können die verformbaren Elemente weitere mechanische Maßnahmen aufweisen wie zum Beispiel Nuten und oder dergleichen, mit denen ihre Eigenschaften eingestellt werden können. Insbesondere kann diesbezüglich eine Wedel-Nut-Technologie zum Einsatz kommen. Vorzugsweise ist das passive Dämpfungssystem derart ausgelegt, dass ein weitgehend ungestörtes Durchfahren von Resonanzstellen erreicht werden kann.

Besonders vorteilhaft kann die Dämpfungseinheit einen Aktuator aufweisen. Mittels des Aktuators kann eine aktive Dämpfung einer Resonanzstelle beziehungsweise Resonanzschwingung erreicht werden. Zu dem Zweck wird der Aktuator mittels eines Regelungssystem geeignet angesteuert. Der Aktuator kann beispielsweise ein den piezoelektrischen Effekt nutzender Aktuator, zum Beispiel in Stapelbauweise oder dergleichen sein.

Mit der Erfindung wird eine rotierende elektrische Maschine der gattungsgemäßen Art vorgeschlagen, wobei der Ständer wie zuvor ausgeführt ausgebildet ist. Dadurch kann die rotierende elektrische Maschine einfacher und kostengünstiger ausgebildet sein. Weiterhin kann eine Schallreduktion und eine verbesserte Kühlung erreicht werden.

Die Erfindung sieht vor, dass die rotierende elektrische Maschine ein vom Blechpaket des Ständers beabstandetes Gehäuse aufweist. Dadurch kann ein Schutz der elektrischen Maschine vor äußeren Einwirkungen erreicht werden. Zugleich erlaubt es die erfindungsgemäße Konstruktion, ein einfaches Gehäuse mit wenig komplexen Bauteilen auszubilden. Das Gehäuse muss bei der Erfindung nämlich keine Drehmomente übertragen und auch keine thermische Ankopplung realisieren. Dadurch kann das Gehäuse kostengünstig aus Blech hergestellt sein. Natürlich erlaubt es die Erfindung, auch Gehäuse aus Werkstoffen wie Kunststoff, Verbundwerkstoffen, beispielsweise faserverstärkten Kunststoffen oder dergleichen zu nutzen.

Darüber hinaus kann mit der Erfindung das aufwändige Fügen von Ständer und Gehäuse weitgehend vermieden werden, weil eine Verbindung von Gehäuse und Ständer nicht mehr erforderlich ist. Infolgedessen ist auch eine Fertigung von Ständer beziehungsweise Ständerbauteilen und Gehäuse mit seinen Bauteilen nicht mehr an die für das Fügen erforderlichen engen Toleranzen gebunden. Dadurch kann Aufwand, insbesondere können Kosten eingespart werden.

Das Gehäuse bildet demnach lediglich noch eine dünnwandige Schutzabdeckung, woraus sich ergänzend eine Gewichtseinsparung ergibt.

Um die Schallunterdrückung weiter zu verbessern, ist vorgesehen, dass zwischen dem Blechpaket und dem Gehäuse ein schalldämmendes Material angeordnet ist. Dies kann beispielsweise als eigene Schicht mit dem Gehäuse verbunden sein. Das schalldämmende Material selbst kann durch einen porigen Werkstoff gebildet sein, beispielsweise einen Schaumstoff, insbesondere einen offenporigen Schaumstoff, einen Faserstoff, beispielsweise Mineralfaser, Steinwolle oder dergleichen, oder Kombinationen hiervon. Zwischen dem Blechpaket und dem Gehäuse beziehungsweise dem schalldämmenden Material kann ferner ein Luftspalt vorgesehen sein, der ein Durchströmen eines Kühlmediums wie zum Beispiel Luft oder dergleichen erlaubt.

Vorteilhaft umfasst die rotierende elektrische Maschine einen mit einer Stütztraverse einer Drehmomentstütze verbindbaren Grundrahmen. Der Grundrahmen kann an die Drehmomentstützen adaptiert ausgebildet sein, sodass eine zuverlässige und einfach herzustellende Verbindung mit einem Fundament, oder einer dergleichen Auflage realisiert werden kann. Besonders vorteilhaft kann die Drehmomenteinleitung in unmittelbarer Nähe eines Fußes am Grundrahmen erfolgen, wodurch sich ein sehr günstiger Kraftfluss ergibt. Dadurch kann ferner die Möglichkeit eröffnet werden, die Wandstärke des Grundrahmens im Bereich zwischen den Füßen zu minimieren. Daraus ergeben sich weitere Gewichts- und Kostenvorteile. Der Grundrahmen ist vorzugsweise Bestandteil der rotierenden elektrischen Maschine.

Eine weitere Ausgestaltung sieht vor, dass zwischen der Stütztraverse und dem Grundrahmen eine Dämpfereinheit angeordnet ist. Die Dämpfereinheit kann beispielsweise durch ein elastisches Bauelement gebildet sein, beispielsweise einem Gummipuffer, einem elastischen Kunststoffelement und/oder dergleichen. Dadurch lässt sich eine weitere Entkopplung der rotierenden elektrischen Maschine von der Auflage erreichen.

Ferner kann vorgesehen sein, dass das Gehäuse eine Kühlvorrichtung aufweist. Die Kühlvorrichtung kann beispielsweise eine auf einem Medium wie Luft, Wasser oder dergleichen basierende Kühlvorrichtung sein. Besonders vorteilhaft erweist sich eine Luftkühlvorrichtung, zu welchem Zweck das Gehäuse einen Ventilator aufweist, der über eine Einlassöffnung Kühlluft ansaugt und zur rotierenden elektrischen Maschine, beispielsweise dem Blechpaket, dem Läufer und/oder dergleichen führt. Über eine Austrittsöffnung im Gehäuse kann die erwärmte Luft wieder abgeführt werden.

Insbesondere bei großen rotierenden elektrischen Maschinen, die auf große Leistung und/oder große Drehzahl ausgelegt sind, werden hohe Anforderungen an die Dynamik gestellt. Beispielsweise ist der Läufer schlank ausgeführt, das heißt, mit kleinem Durchmesser bei großer Paketlänge. Dadurch ergibt sich, dass zum Erreichen einer Betriebsdrehzahl aus dem Stand heraus eine oder mehrere Biegeschwingungen beziehungsweise sich daraus ergebende Resonanzen durchfahren werden müssen. Es ist angestrebt, solche Resonanzstellen schnell zu durchfahren, und gezielt Dämpfungseffekte zu nutzen, um eine Resonanzüberhöhung möglichst gering zu halten. Ohne derartige Dämpfungen können solche Bereiche nicht sicher durchfahren werden, beziehungsweise ein überkritischer Betrieb der rotierenden elektrischen Maschine kann nicht erreicht werden. Der überkritische Betrieb ist bei der rotierenden elektrischen Maschine ein Betriebszustand mit einer Drehzahl oberhalb einer Eigenschwingung und demzufolge einer Resonanz.

Gemäß einer weiteren Ausgestaltung ist deshalb bei der rotierenden elektrischen Maschine zwischen der Stütztraverse und dem Grundrahmen eine Dämpfungseinheit angeordnet. Vorzugsweise ist die Dämpfungseinheit in die rotierende elektrische Maschine integriert angeordnet, sodass Montageaufwand bei der Aufstellung der rotierenden elektrischen Maschine reduziert werden kann.

In einer Weiterbildung weist die Dämpfungseinheit einen Aktuator auf. Dadurch kann eine hoch effektive Dämpfung von Resonanzen erreicht werden.

Weitere Merkmale und Vorteile sind der folgenden Beschreibung eines Ausführungsbeispiels zu entnehmen. Die Beschreibung dient lediglich zur Erläuterung der Erfindung und soll diese nicht beschränken.

Es zeigen:
- FIG 1: eine schematische Schnittdarstellung eines Ausschnitts eines Blechpakets eines Ständers verbunden mit einer Drehmomentstütze gemäß der Erfindung,
- FIG 2: eine perspektivische schematische Darstellung einer rotierenden elektrischen Maschine mit einer Festlegung gemäß der Erfindung,
- FIG 3: eine schematische Darstellung in einer rotierenden elektrischen Maschine mit einer Festlegung des Ständers gemäß der Erfindung in einer Seitenansicht,
- FIG 4: eine perspektivische Ansicht der Maschine gemäß FIG 3 angeordnet in einem Gehäuse,
- FIG 5: in schematisch Frontansicht ein vergrößerter Ausschnitt V aus FIG 2, und
- FIG 6: ein Auslenkung-Zeit-Diagramm, welches eine Schwingungsauslenkung an einer Stütztraverse einer Drehmomentstütze gemäß FIG 1 und 2 über der Zeit bei unterschiedlichen Dämpfungseinheiten darstellt.

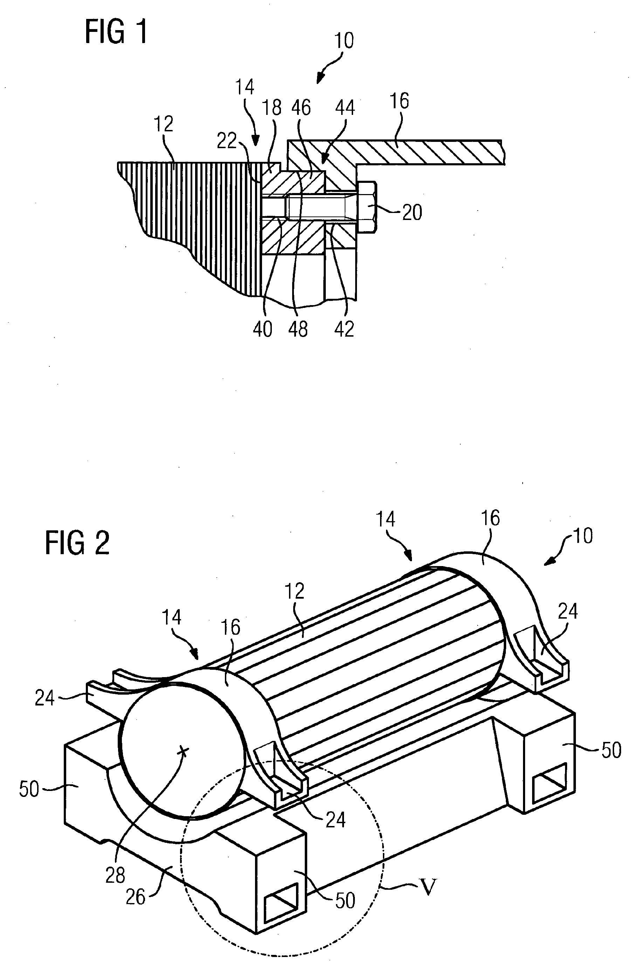

FIG 1 zeigt in schematischer Schnittdarstellung einen Ausschnitt eines Ständers 10 einer rotierenden elektrischen Maschine 34 mit einem Blechpaket 12, an dessen stirnseitigen Enden 14 jeweils eine Drehmomentstütze 16 befestigt ist, mittels der das Blechpaket 12 festlegbar ist. Über die Drehmomentstützen 16 ist das Blechpaket 12 somit drehfest angeordnet, sodass es die Reaktio in Wechselwirkung mit dem im Ständer 10 angeordneten Läufer 32 ableiten kann.

Aus FIG 1 ist ferner ersichtlich, dass zwischen dem Blechpaket 12 und der Drehmomentstütze 16 ein Druckring 18 angeordnet ist. Der Druckring 18 ist über eine Verschweißung 22 mit dem Blechpaket 12 verbunden. Der Druckring 18 stellt darüber hinaus Gewindebohrungen 40 bereit, die in geeigneter Anzahl über den äußeren Umfang des Druckrings 18 in axialer Richtung der rotierenden elektrischen Maschine 34 angeordnet sind. Die Drehmomentstütze 16 weist entsprechende Bohrungen auf, sodass mittels Verschraubungen 20 eine lösbare Verbindung der Drehmomentstütze 16 mit dem Druckring 18 gebildet werden kann.

Der Druckring 18 weist ferner einen umlaufenden Absatz 46 auf, der mit einer stirnseitig in der Drehmomentstütze 16 eingebrachten umlaufenden Ausnehmung 48 korrespondiert. Dadurch wird eine Zentrierung 44 gebildet.

Die Anzahl der Verschraubungen 22 ist derart gewählt, dass die Flächenpressung ausreicht, um im ungünstigsten Lastfall auch das Kurzschlussmoment der rotierenden elektrischen Maschine 34 übertragen zu können. Die in FIG 1 dargestellte Anordnung ist an beiden Enden des Blechpakets 12 des Ständers 10 identisch ausgeführt.

FIG 2 zeigt in perspektivischer schematischer Darstellung den Ständer 10 angeordnet oberhalb eines Grundrahmens 26, der mit einem nicht näher dargestellten Fundament fest verbunden ist. Zu diesem Zweck weist der Grundrahmen 26 einen etwa rechteckförmigen Grundquerschnitt auf, in dessen Eckpunkten Füße 50 angeordnet sind. Ferner ist aus FIG 2 ersichtlich, dass die Drehmomentstützen 16 Stütztraversen 24 aufweisen, die gegenüberliegend in Umfangsrichtung an den Drehmomentstützen 16 angeordnet sind. Über nicht dargestellte Befestigungen mit Dämpfereinheiten 60 ist der Ständer 10 mit dem Grundrahmen 26 im Bereich der Füße 50 über die Stütztraversen 24 verbunden.

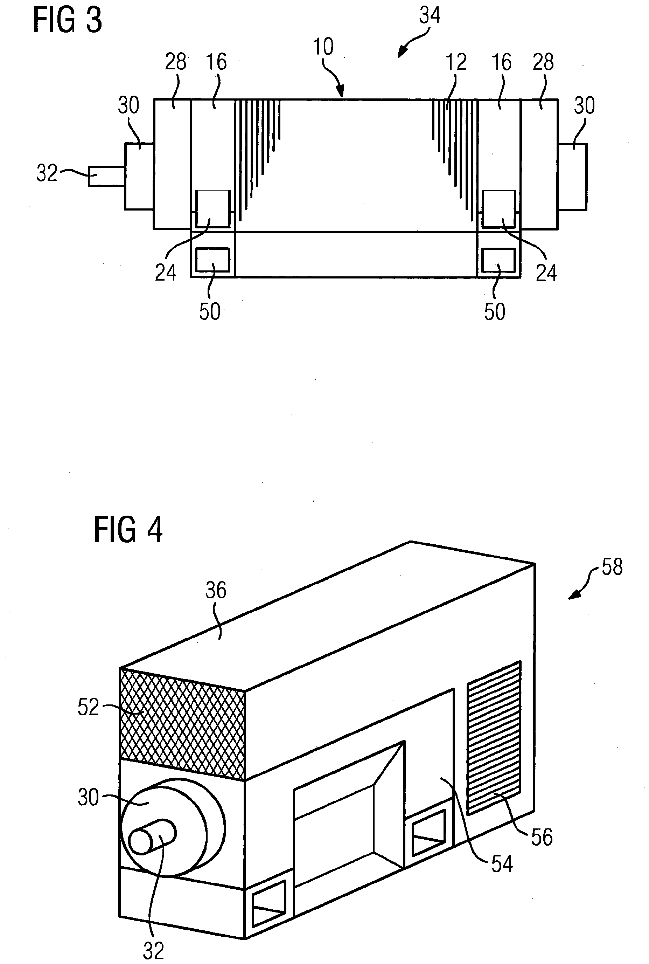

Ferner ist aus FIG 2 ersichtlich, dass die Drehmomentstütze 16 einstückig mit einem Lagerschild 28 versehen ist. Der Lagerschild 28 weist eine Lagereinheit 30 auf (FIG 3), mittels der ein Läufer 32 in einer nicht dargestellten Öffnung des Ständers 10 drehbar gelagert angeordnet ist.

FIG 3 zeigt schematisch eine Seitenansicht der rotierenden elektrischen Maschine 34 mit einem Ständer 10 und einem in einer nicht bezeichneten Öffnung des Ständers 10 drehbar gelagert angeordneten Läufer 32. Der Ständer 10 ist, wie zuvor anhand der FIG 1 und FIG 2 erläutert, ausgebildet.

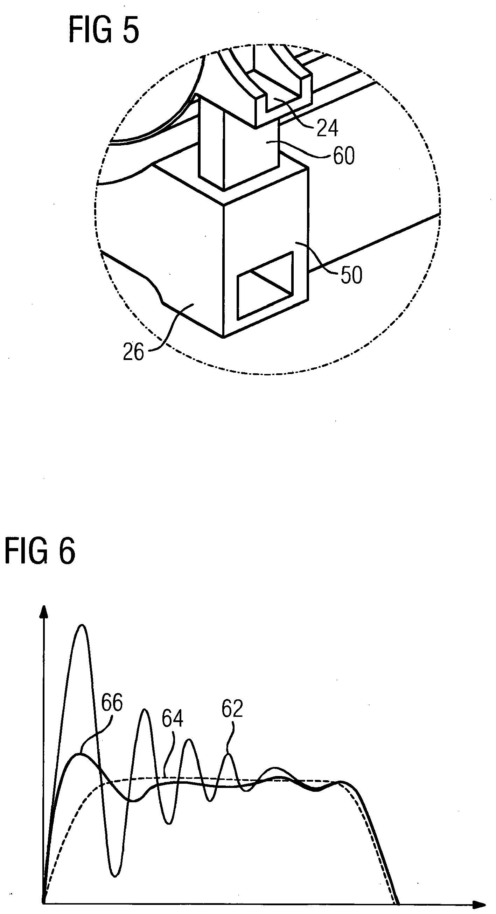

Die rotierende elektrische Maschine 34 weist einen Grundrahmen 26 auf, der mittels der Füße 50 mit einem Fundament fest verbunden ist. Im Bereich der Füße 50 ist ferner der Ständer 10 über die Stütztraversen 24 der Drehmomentstützen 16 mit dem Grundrahmen 26 verbindbar. Aus Gründen der Übersichtlichkeit ist diese Verbindung in FIG 2 nicht dargestellt, jedoch ist in dieser Ausgestaltung vorgesehen, dass die Dämpfereinheit 60 zwischen der Stütztraverse 24 und dem Grundrahmen 26 angeordnet ist (FIG 5).

In FIG 4 ist die rotierende elektrische Maschine 34 in einem Gehäuse 36 angeordnet in perspektivischer schematischer Darstellung dargestellt. Aus dem Gehäuse 36 ragt stirnseitig die Lagereinheit 30 sowie ein Wellenzapfen des Läufers 32. Aus FIG 4 ist ersichtlich, dass das Gehäuse 36 eine Aufsetzkühlung 58 umfasst, die mit einer Lufteintrittsöffnung 46 und einer Luftaustrittsöffnung 52 verbunden ist. Ferner ist eine Blechabdeckung 54 vorgesehen, die - nicht dargestellt - eine Luftleitvorrichtung innerhalb des Gehäuses 36 zur Kühlung der rotierenden elektrischen Maschine 34 bereitstellt. Über die Lufteintrittsöffnung 56 wird mittels eines nicht dargestellten Lüfters der Aufsatzkühlung 58 Luft angesaugt und zur Kühlung durch die rotierende elektrische Maschine 34 geführt. Nachdem die Luft die rotierende elektrische Maschine 34 passiert hat, verlässt sie das Gehäuse 36 über die Luftaustrittsöffnung 52.

Das Gehäuse 36 ist als Blechgehäuse ausgebildet und dient lediglich dem Schutz der rotierenden elektrischen Maschine 34. Das Gehäuse 36 ist somit nicht mit dem Ständer 10 mechanisch verbunden, und kann deshalb auch keine Schwingungen des Ständers 10 aufnehmen. Dadurch kann eine geringe Schallaussendung erreicht werden.

FIG 5 zeigt in vergrößerter Frontansicht den Bereich V aus FIG 2. Wie aus FIG 5 ersichtlich ist, ist die Stütztraverse 24 über eine Dämpfungseinheit 60 mit dem Fuß 50 des Grundrahmens 26 verbunden, sodass eine Auflage für den Ständer 10 gebildet ist. Die Dämpfungseinheit 60 ist mittels nicht dargestellter Befestigungsmittel sowohl mit dem Fuß 50 als auch mit der Stütztraverse 24 verbunden. Die Verbindung ist vorliegend durch eine Schraubverbindung gebildet. Daneben kann sie aber auch durch Kleben, Nieten und/oder dergleichen gebildet sein.

Als Schwingungsdämpfungseinheit 60 kann sowohl ein passives Dämpfungssystem basierend auf einem elastisch und/oder plastisch verformbaren Werkstoff oder auch ein aktives Dämpfungssystem basierend auf einem steuerbaren Aktuator, beispielsweise einen piezo-elektrischen Aktuator und/oder dergleichen oder Kombinationen hiervon aufweisen.

FIG 6 zeigt in einem grafischen Diagramm, wie sich die Dämpfungseinheit 60 bezüglich der Funktion der rotierenden elektrischen Maschine 34 auswirkt. Auf der Ordinate ist normiert eine Auslenkung im Bereich der Sütztraverse 24 aufgetragen. Die Abszisse stellt eine Zeitachse dar. Im Ursprung wird die rotierende elektrische Maschine 34 eingeschaltet.

Ein Graph 62 im Diagramm der FIG 6 stellt einen Schwingungsverlauf dar, bei dem keine Dämpfungseinheit, sondern lediglich eine starre Verbindung zwischen der Stütztraverse 24 und dem Fuß 50 vorgesehen ist. Zu erkennen ist große Auslenkung, die durch Aktivierung einer Resonanz der rotierenden elektrischen Maschine 34 in dem Aufbau gebildet ist. Die Schwingung klingt erst mit weiter Fortschreitung der Zeit ab. Es handelt sich hierbei um einen im Wesentlichen ungedämpften beziehungsweise schwach gedämpften Vorgang. In dieser Ausgestaltung ist es schwierig beziehungsweise gefährlich, einen überkritischen Betriebszustand der rotierenden elektrischen Maschine 34 erreichen zu wollen.

Um hier eine Verbesserung erreichen zu können, ist die Dämpfungseinheit 60 vorgesehen. Der Graph 66 im Diagramm der FIG 6 zeigt den gleichen, wie zuvor beschriebenen Vorgang, jedoch diesmal mit einer Dämpfungseinheit 60, das als passives Dämpfungssystem ausgelegt ist und durch ein speziell geformtes Element gebildet ist, das unter der Handelsbezeichnung Power Stop™ ein Dämpfungselement mit Wendel-Nut-Technologie nutzt. Zu erkennen ist, dass die Auslenkung der Stütztraverse 24 deutlich reduziert werden kann, wobei lediglich in einem Anfangsbereich eine kleine Überhöhung der Auslenkung erfolgt. Das passive Dämpfungssystem erlaubt es somit, eine deutliche Verbesserung hinsichtlich der Betriebseigenschaften der rotierenden elektrischen Maschine 34 im bestehenden Aufbau erreichen zu können.

Eine weitere Verbesserung ergibt sich, wenn als Dämpfungseinheit 60 ein dielektrischer Aktuator, in Form eines Hochvolt-Stapelaktuators zum Einsatz kommt. FIG 6 zeigt in dem Diagramm mit dem Graph 64 die Auswirkungen. Aus dem Diagramm der FIG 6 ist zu entnehmen, dass mittels des dielektrischen Aktuators die Auslenkung vollständig reduziert werden kann. Dadurch ist es möglich, die rotierende elektrische Maschine 34 über den gesamten möglichen Drehzahlbereich zuverlässig und sicher zu betreiben, insbesondere auch den überkritischen Bereich zu erreichen.

## Patentansprüche

1. Rotierende elektrische Maschine (34) mit einem Ständer (10) und einem in einer Öffnung des Ständers (10) drehbar gelagert angeordneten Läufer (32), wobei der Ständer (10) ein Blechpaket (12) in Form eines aus einem ferromagnetischen Werkstoff hergestellten und damit magnetisierbaren, schichtweise aufgebauten Körpers, zwei Druckringe (18) und zwei Drehmomentstützen (16) aufweist, wobei jeweils ein Druckring (18) mit jeweils einem der gegenüberliegenden stirnseitigen Enden des Blechpakets (12) stoffschlüssig verbunden ist, wobei an jedem der Druckringe (18) jeweils eine der Drehmomentstützen (16) befestigt ist, so dass das Blechpaket (12) mit den Druckringen (18) mittels der Drehmomentstützen (16) direkt gestützt ist und auf den Ständer (10) einwirkende Kräfte und Momente über die Drehmomentstützen (16) vollständig ableitbar sind, so dass mittels der Drehmomentstützen (16) das Blechpaket (12) festlegbar ist,
**gekennzeichnet durch**
ein vom Blechpaket (12) des Ständers (10) beabstandetes Gehäuse (36), wobei zwischen dem Blechpaket (12) und dem Gehäuse (36) ein schalldämmendes Material angeordnet ist.

2. Rotierende elektrische Maschine nach Anspruch 1,
**dadurch gekennzeichnet, dass** das Gehäuse (36) eine Kühlvorrichtung (38) aufweist.

3. Rotierende elektrische Maschine nach einem der Ansprüche 1 oder 2, **gekennzeichnet durch** einen mit einer Stütztraverse (24) einer Drehmomentstütze (16) verbindbaren Grundrahmen (26).

4. Rotierende elektrische Maschine nach Anspruch 3,
**dadurch gekennzeichnet, dass** zwischen der Stütztraverse (24) und dem Grundrahmen (26) eine Dämpfungseinheit (60) angeordnet ist.

5. Rotierende elektrische Maschine nach Anspruch 4,
**dadurch gekennzeichnet, dass** die Dämpfungseinheit (60) einen Aktuator aufweist.

6. Rotierende elektrische Maschine nach einem der Ansprüche 1 bis 5, **dadurch gekennzeichnet, dass** der Druckring (18) über Flächenpressung mit der Drehmomentstütze (16) drehfest verbunden ist.

7. Rotierende elektrische Maschine nach einem der Ansprüche 1 bis 6, **dadurch gekennzeichnet, dass** die stoffschlüssige Verbindung durch Schweißen gebildet ist.

8. Rotierende elektrische Maschine nach einem der Ansprüche 1 bis 7, **dadurch gekennzeichnet, dass** die Drehmomentstütze (16) eine Lagervorrichtung (28, 30) für einen Läufer der rotierenden elektrischen Maschine (34) aufweist.

9. Rotierende elektrische Maschine nach einem der Ansprüche 1 bis 8, **dadurch gekennzeichnet, dass** die Drehmomentstütze (16) eine Stütztraverse (24) aufweist.

10. Rotierende elektrische Maschine nach Anspruch 9,
**dadurch gekennzeichnet, dass** die Stütztraverse (24) eine Dämpfungseinheit (60) aufweist.

11. Rotierende elektrische Maschine nach Anspruch 10,
**dadurch gekennzeichnet, dass** die Dämpfungseinheit (60) einen Aktuator aufweist.

## Claims

1. Rotating electric machine (34) having a stator (10) and a rotor (32) arranged rotatably supported in an opening of the stator (10), wherein the stator (10) has a laminated core (12) in the form of a body which is produced from a ferromagnetic material, magnetisable and assembled in layers, two pressure rings (18) and two torque supports (16), wherein each pressure ring (18) is connected with a positive fit in each case to one of the opposing front ends of the laminated core (12), wherein in each case one of the torque supports (16) is fastened to each pressure ring (18) so that the laminated core (12) with the pressure rings (18) is supported directly using the torque supports (16) and forces and moments acting on the stator (10) can be entirely deflected by way of the torque supports (16) so that the laminated core (12) can be defined using the torque supports (16),
**characterised by**
a housing (36) arranged at a distance from the laminated core (12) of the stator (10), wherein a sound-absorbing material is arranged between the laminated core (12) and the housing (36).

2. Rotating electric machine according to claim 1,
**characterised in that** the housing (36) has a cooling apparatus (38).

3. Rotating electric machine according to one of claims 1 or 2, **characterised by** a base frame (26) that can be connected to a supporting traverse (24) of a torque support (16).

4. Rotating electric machine according to claim 3,
**characterised in that** a damping unit (60) is arranged between the supporting traverse (24) and the base frame (26).

5. Rotating electric machine according to claim 4,
**characterised in that** the damping unit (60) has an actuator.

6. Rotating electric machine according to one of claims 1 to 5, **characterised in that** the pressure ring (18) is connected in a torque-proof manner to the torque support (16) by way of surface pressure.

7. Rotating electric machine according to one of claims 1 to 6, **characterised in that** the positive-fit connection is formed by welding.

8. Rotating electric machine according to one of claims 1 to 7, **characterised in that** the torque support (16) has a bearing apparatus (28, 30) for a rotor of the rotating electric machine (34).

9. Rotating electric machine according to one of claims 1 to 8, **characterised in that** the torque support (16) has a supporting traverse (24).

10. Rotating electric machine according to claim 9,
**characterised in that** the supporting traverse (24) has a damping unit (60).

11. Rotating electric machine according to claim 10,
**characterised in that** the damping unit (60) has an actuator.

## Revendications

1. Machine (34) électrique tournante comprenant un stator (10) et un rotor (32) montés tournant dans une ouverture du stator (10), le stator (10) ayant un paquet (12) de tôles sous la forme de corps en un matériau ferromagnétique constitué de manière stratifiée et ainsi magnétisable, deux anneaux (18) de pression et deux supports (16) de couple, un anneau (18) de pression étant relié à coopération de matière à l'une des extrémités opposée du côté frontal du paquet (12) de tôles, respectivement l'un des supports (16) de couple étant fixé à chacun des anneaux (18) de pression, de manière à ce que le paquet (12) de tôles soit soutenu directement par les anneaux (18) de pression au moyen des supports (16) de couple et que des forces et des couples s'appliquant au stator (10) puissent être déviées complètement par les supports (16) de couple, de manière à pouvoir fixer le paquet (12) de tôles au moyen des supports (16) de couple,
**caractérisée par**
une enveloppe (36) à distance du paquet (12) de tôles du stator (10), un matériau insonorisant étant disposé entre le paquet (12) de tôles et l'enveloppe (36).

2. Machine électrique tournante suivant la revendication 1,
**caractérisée en ce que**
l'enveloppe (36) a un dispositif (38) de refroidissement.

3. Machine électrique tournante suivant l'une des revendications 1 ou 2,
**caractérisée par**
un cadre (26) de base pouvant être relié à une traverse (24) d'un support (16) de couple.

4. Machine électrique tournante suivant la revendication 3,
**caractérisée en ce qu'**
une unité (60) d'amortissement est disposée entre la traverse (24) du support et le cadre (26) de base.

5. Machine électrique tournante suivant la revendication 4,
**caractérisée en ce que**
l'unité (60) d'amortissement a un actionneur.

6. Machine électrique tournante suivant l'une des revendications 1 à 5,
**caractérisée en ce que**
l'anneau (18) de pression est solidaire en rotation du support (16) de couple par pression de surface.

7. Machine électrique tournante suivant l'une des revendications 1 à 6,
**caractérisée en ce que**
la liaison à coopération de matière est formée par soudure.

8. Machine électrique tournante suivant l'une des revendications 1 à 7,
**caractérisée en ce que**
le support (16) de couple a un dispositif (28, 30) de palier pour un rotor de la machine (34) électrique tournante.

9. Machine électrique tournante suivant l'une des revendications 1 à 8,
**caractérisée en ce que**
le support (16) de couple a une traverse (24) de support.

10. Machine électrique tournante suivant la revendication 9,
**caractérisée en ce que**
la traverse (24) de support a une unité (60) d'amortissement.

11. Machine électrique tournante suivant la revendication 10,
**caractérisée en ce que**
l'unité (60) d'amortissement a un actionneur.
